# EUROPEAN PATENT APPLICATION

(11) **EP 4 614 793 A1**
(43) Date of publication of application: **10.09.2025**
(21) Application number: 24162352.9
(22) Date of filing: 08.03.2024
(51) Int. Cl.: H02M 7/483, H02M 1/00, B60L 53/20

(54) **FLYING CAPACITOR BALANCING FOR STANDBY OPERATION**

(71) Applicant: Infineon Technologies Austria AG, 9500 Villach (AT)
(72) Inventor: KASPER, Matthias Joachim, 9500 Villach (AT); WATTENBERG, Martin, 9500 Villach (AT); GARCIA LORENZ, Oscar Francisco, 9500 Villach (AT)
(74) Representative: Infineon Patent Department

(57) **Abstract**

A power converter module and a corresponding method is presented. The power converter module may comprise a first switching element coupled between a first terminal of the power converter module and a first capacitor node, a second switching element coupled between the first capacitor node and a switching node, a third switching element coupled between the switching node and a second capacitor node, and a fourth switching element coupled between the second capacitor node and a reference node. The power converter module may comprise a flying capacitor coupled between the first capacitor node and the second capacitor node. The power converter module may be configured to, in standby operation, alter a flying capacitor voltage across the flying capacitor by switching at least two of the four switching elements.

## Description

### Technical field

The present document relates to methods and circuits for balancing flying capacitor voltages in multi-level topologies in standby operation. In particular, the present document relates to techniques for balancing the flying capacitor voltages in the absence of currents flowing between input and output of multi-level power converters.

### Background

Multi-level flying capacitor topologies are offering a way to push the performance barriers of efficiency and power density in power electronic systems by providing several advantages. Firstly, an increase of effective switching frequency and harmonic cancellation is enabled. Secondly, it becomes possible to have more voltage levels for reduced voltage-time areas seen by magnetic components. Thirdly, reduced EMI filters are required due to lower differential and common mode emission, as amplitude of switch events is smaller. Moreover, multi-level topologies enable usage of semiconductors with lower voltage ratings and better figure-of-merit.

Thus, we are seeing an adoption of flying-capacitor topologies also in high-voltage applications, such as 3-phase on-board chargers, where the usage of 600V rated devices such as GaN HEMTs (Gallium Nitride High Electron Mobility Transistors) is enabled for DC-link voltages of 800V (and above), which achieves a significant reduction of losses and volume compared to 2-level systems with 1200V devices.

For instance, such a system is a 3-phase non-isolated on-board charger (OBC), where the flying capacitors are used in the interleaved power factor correction (PFC) when e.g. two bridge-legs are paralleled for each phase, but also for DC-link balancer circuits which are required for single phase operation to balance the upper and lower capacitor of the DC-link in the OBC.

The benefits of better system performance, however, come at the price of increased control effort to keep the flying capacitor voltage balanced at all times, which is required to keep the voltage seen by the switches within their ratings. Thus, several different flying capacitor balancing strategies have been proposed in literature that essentially modify during operation the duty cycle of the switches to adjust the charging and discharging time intervals of the flying capacitors.

The problem of balancing in standby situations is solved to date e.g. by external balancing resistors, that passively balance the flying capacitor voltage. This solution however requires additional components, which increases the bill of materials (BOM) and the overall footprint, and also leads to constant losses, even in normal operation, when the balancing is achieved by e.g. duty cycle variation.

Thus, it is an object of the present invention to provide a control mechanism for balancing flying capacitor voltages in multi-level power converters which are in standby operation. For example, it is an object of the present invention to provide a control mechanism for balancing flying capacitor voltages in bridge-legs of OBCs that are not handling any currents.

### Summary

According to an aspect, a power converter module is presented. The power converter module may comprise a first switching element coupled between a first terminal of the power converter module and a first capacitor node, a second switching element coupled between the first capacitor node and a switching node, a third switching element coupled between the switching node and a second capacitor node, and a fourth switching element coupled between the second capacitor node and a reference node. The power converter module may comprise a flying capacitor coupled between the first capacitor node and the second capacitor node. The power converter module may be configured to, in standby operation, alter a flying capacitor voltage across the flying capacitor by switching at least two of the four switching elements.

The power converter module may form part of a three-level power converter, or generally of a multi-level power converter. By switching at least two of the four switching elements it becomes possible to control and balance the flying capacitor voltage during standby operation without the need for additional circuit elements such as e.g. balancing resistors.

The flying capacitor may be a passive electronic component capable of storing electrical energy in an electric field. The flying capacitor may comprise a first terminal and a second terminal. The flying capacitor may be denoted as "flying" since, during regular operation of the power converter module, one of said terminals may be driven to a defined voltage level and the voltage at the other terminal may fly to a voltage that depends on the defined voltage level and the voltage across the flying capacitor. The voltage across the flying capacitor may in turn depend on the amount of charge stored and on the capacitance of the flying capacitor. The terminals of the flying capacitor may not be connected to a reference potential such as e.g. ground.

The switching elements may be implemented with any suitable devices, such as, for example, metal-oxide-semiconductor field effect transistors MOSFETs, insulated-gate bipolar transistors IGBTs, MOS-gated thyristors, or any other suitable power devices. For instance, the switching elements may be implemented using a III-V compound semiconductor material such as e.g. GaN- high-electron-mobility transistors HEMTs. Each switching element may have a control terminal (e.g. a gate) to which a respective control signal (e.g. driving voltage/current) may be applied to turn the switching element on (i.e. to close the switching element) or to turn the switching element off (i.e. to open the switching element).

The reference node may or may not be a reference potential such as e.g. ground. At this, reference potential or ground may not be limited to a direct physical connection to earth or a voltage of 0V. Rather, the terms reference potential or ground may refer to circuit nodes to which and from which electrical currents may flow or from which voltages may be measured.

The standby operation may be defined as follows: Essentially no current may be flowing between the first terminal of the power converter and the switching node during standby operation. Or, alternatively or additionally: Essentially no current is flowing between the switching node and the reference node during standby operation.

The power converter module may comprise an inductor coupled between the switching node and a second terminal of the power converter module. Essentially no current may be flowing through the inductor during standby operation.

The power converter may be configured to switch between standby operation and regular operation. The power converter module may be configured to, in regular operation, convert power between the first terminal and the second terminal. In regular operation, balancing of the flying capacitor voltage may be achieved by different control methods and/or circuit elements which are not described within this document. This document, in contrast, only addresses flying capacitor balancing in standby operation, wherein standby operation may be defined by the aforementioned current conditions. In standby operation, the flying capacitors may have to stay balanced in case the bridge-leg of an OBC is not operating but still connected to a charged DC-link. This may happen for example in phase shedding operation, when e.g. not all paralleled bridge-legs are operational, but also in 3-phase operation of the on-board charger when the DC-link balancer circuit is not active. Nevertheless, a regulated flying capacitor voltage may still have to be maintained. Further, during line drop out or no load, no current may be used to keep the capacitors balanced. Moreover, during shut-down of the power converter, it may be strictly necessary to keep balance while ramping down the voltage.

During regular operation, the power converter module may be used in buck or boost mode. In buck mode, power may flow through the power converter module from the first terminal to the second terminal. Thus, the first terminal may be regarded as an input terminal, and the second terminal may be regarded as an output terminal. The output voltage at the second terminal may be lower than the input voltage at the first terminal. The output current at the second terminal may be higher than the input current at the first terminal.

In boost mode, power may flow through the power converter module in opposite direction from the second terminal to the first terminal. Thus, the second terminal may be regarded as an input terminal, and the first terminal may be regarded as an output terminal. The output voltage at the first terminal may be higher than the input voltage at the second terminal. The output current at the first terminal may be lower than the input current at the second terminal.

The power converter module may be configured to alter the flying capacitor voltage by dissipating charges which are stored at the output capacitances of the at least two switching elements. The charges may be electrical charges. In standby operation, the power converter module may be configured to dissipate said charges in a channel (e.g. the drain-source channel) of the respective switching element. The power converter module may be configured to dissipate said charges when the respective switching element is turned on.

The power converter module may be configured to control the switching of the at least two switching elements based on a difference between the flying capacitor voltage and a setpoint voltage. In particular, the power converter module may be configured to control the switching of the at least two switching elements based on a difference between the flying capacitor voltage and a setpoint voltage for regulating the flying capacitor voltage towards the setpoint voltage. The power converter module may comprise a comparator configured to compare a voltage indicative of the flying capacitor voltage with the setpoint voltage for determining whether the flying capacitor voltage must be increased or decreased. The power converter module may be configured to sense the voltage indicative of the flying capacitor voltage. In conclusion, the power converter module may comprise a feedback loop for controlling the flying capacitor voltage in standby operation.

The power converter module may be configured to alter the flying capacitor voltage by alternatingly turning on one of the at least two switching elements. At the same time, during standby operation, the power converter module may be configured to keep the remaining two (not alternatingly switching) switching elements turned off.

The power converter module may be configured to alternatingly turn on the second and the third switching element for decreasing the flying capacitor voltage. The power converter module may be configured to alternatingly turn on the second and the third switching element if the flying capacitor voltage is greater than the setpoint voltage. The power converter module may be configured introduce a dead time during an on-time when the second switching element is turned on and an on-time when the third switching element is turned on. The power converter module may be configured to turn off the second and the third switching element during the dead time. For example, a duration of the on-time of the second switching element may be chosen equal to a duration of the on-time of the third switching element.

The power converter module may be configured to alternatingly turn on the first and the fourth switching element for increasing the flying capacitor voltage. The power converter module may be configured to alternatingly turn on the first and the fourth switching element if the flying capacitor voltage is smaller than the setpoint voltage. Again, the power converter module may be configured introduce a dead time during an on-time when the first switching element is turned on and an on-time when the fourth switching element is turned on. The power converter module may be configured to turn off the first and the fourth switching element during the dead time. For example, a duration of the on-time of the first switching element may be chosen equal to a duration of the on-time of the fourth switching element.

The power converter module may be configured to determine a switching frequency based on a difference between the flying capacitor voltage and a setpoint voltage. The power converter module may be configured to alternatingly turn on one of the at least two switching elements using said switching frequency. At this, the switching frequency may be the inverse of the duration of one switching cycle, wherein the duration of one switching cycle may be the sum of the on-times of the at least two switching elements. Alternatively, the duration of one switching cycle may be the sum of the on-times of the at least two switching elements plus one or more dead times which may be inserted between the on-times.

The power converter module may be configured to alternatingly turn on one of the at least two switching elements using a first switching frequency when a difference between the flying capacitor voltage and a setpoint voltage has a first value. The power converter module may be configured to alternatingly turn on one of the at least two switching elements using a second, higher switching frequency when a difference between the flying capacitor voltage and the setpoint voltage has second value. The second value may be larger than the first value.

The power converter module may further comprise another capacitor coupled between the first terminal of the power converter module and the reference node.

The another capacitor may be similar or identical to the flying capacitor. The another capacitor may be denoted bulk capacitor or second flying capacitor.

In general, the described power converter module may be a multi-level power converter module comprising further capacitors and switching elements. At this, for each level, a pair of switching elements and a capacitor may be added to the topology. As already mentioned in the foregoing description, the power converter module may be operated in buck or boost mode. Moreover, the described power converter module may form part of a larger power converter. For example, the described power converter module may be a sub-circuit of an on-board charger (OBC) and may be located at a bridge-leg of the OBC.

According to another aspect, a method of controlling a power converter module in standby operation is presented. The power converter module may comprise four switching elements and a flying capacitor. The method may comprise steps corresponding to the functional features of the power converter module described throughout this document. Specifically, the method may comprise altering a flying capacitor voltage across the flying capacitor by switching at least two of the four switching elements.

The power converter module may comprise a first switching element coupled between a first terminal of the power converter module and a first capacitor node, a second switching element coupled between the first capacitor node and a switching node, a third switching element coupled between the switching node and a second capacitor node, and a fourth switching element coupled between the second capacitor node and a reference node. The flying capacitor may be coupled between the first capacitor node and the second capacitor node.

Essentially no current may be flowing between the first terminal of the power converter and the switching node during standby operation. Or, essentially no current may be flowing between the switching node and the reference node during standby operation. The power converter module may comprise an inductor coupled between the switching node and a second terminal of the power converter module. Essentially no current may be flowing through the inductor during standby operation.

The method may comprise altering the flying capacitor voltage by dissipating charges which are stored at the output capacitances of the at least two switching elements. The method may comprise controlling the switching of the at least two switching elements based on a difference between the flying capacitor voltage and a setpoint voltage. The method may comprise altering the flying capacitor voltage by alternatingly turning on one of the at least two switching elements. On the one hand, the method may comprise alternatingly turning on the second and the third switching element for decreasing the flying capacitor voltage. On the other hand, the method may comprise alternatingly turning on the first and the fourth switching element for increasing the flying capacitor voltage.

The method may comprise determining a switching frequency based on a difference between the flying capacitor voltage and a setpoint voltage. The method may comprise alternatingly turning on one of the at least two switching elements using said switching frequency.

The method may comprise alternatingly turning on one of the at least two switching elements using a first switching frequency when a difference between the flying capacitor voltage and a setpoint voltage has a first value. The method may comprise alternatingly turning on one of the at least two switching elements using a second, higher switching frequency when a difference between the flying capacitor voltage and the setpoint voltage has second value. The second value may be larger than the first value.

The power converter module may further comprise another capacitor coupled between the first terminal of the power converter module and the reference node.

According to yet another aspect, a control circuit is presented. The control circuit may be configured to control switching of the switching elements of the power converter module described throughout this document. The control circuit may be configured to control switching of the switching elements of the power converter module in standby operation. The power converter module may comprise four switching elements and a flying capacitor. The control circuit may be configured to generate control signals for switching at least two of the four switching elements such that a flying capacitor voltage across the flying capacitor is altered. In order to avoid repetition, a description of the functionality of the claimed control circuit is omitted here. It corresponds to the method and power converter presented in the foregoing description.

According to yet another aspect, a computer program is presented. The computer program may comprise instructions which, when executed by one or more processors of a control circuit, cause the control circuit to control a power converter module according to the method described within this document.

The computer program may be e.g. software/firmware which is loaded into the memory of the control circuit. To this end, the computer program may be transmitted over a network and the control circuit may comprise a network interface device for receiving the computer program. Alternatively, the computer program may be distributed on a data carrier and may be downloaded to the control circuit. In general, the computer program may be stored on a non-transitory computer-readable medium. This document discloses a non-transitory computer-readable medium storing instructions that, when executed by one or more processors of a control circuit, cause the control circuit to perform the steps described throughout the document.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

In the present document, the term "couple" or "coupled" refers to elements being in electrical communication with each other, whether directly connected e.g., via wires, or indirectly connected via other circuit elements between them. For example, two elements may be said to be coupled even if there is a circuit element such as a switch (which may be turned on and off) in between them. On the other hand, the term "connect" or "connected" refers to elements being directly electrically connected with each other, e.g. via wires, and no circuit elements are located between them.

### Short description of the figures

The present invention is illustrated by way of example, and not by way of limitation, in the figures in which like reference numerals refer to similar or identical elements, and in which
Fig. 1 shows an exemplary switching pattern in the case of an over-charged flying capacitor,
Fig. 2 shows exemplary switching pattern in the case of an under-charged flying capacitor,
Fig. 3 shows exemplary signal waveforms for a switching pattern in the case of an under-charged flying capacitor, and
Fig. 4 shows a step response in a 7-level flying capacitor boost stage.

### Detailed Description

As already discussed in the foregoing description, the present invention may enable voltage balancing by switching the transistors in the flying capacitor bridge-leg depending on the deviation of the flying capacitor voltage from the setpoint (e.g. half of the DC-link voltage in a 3L design).

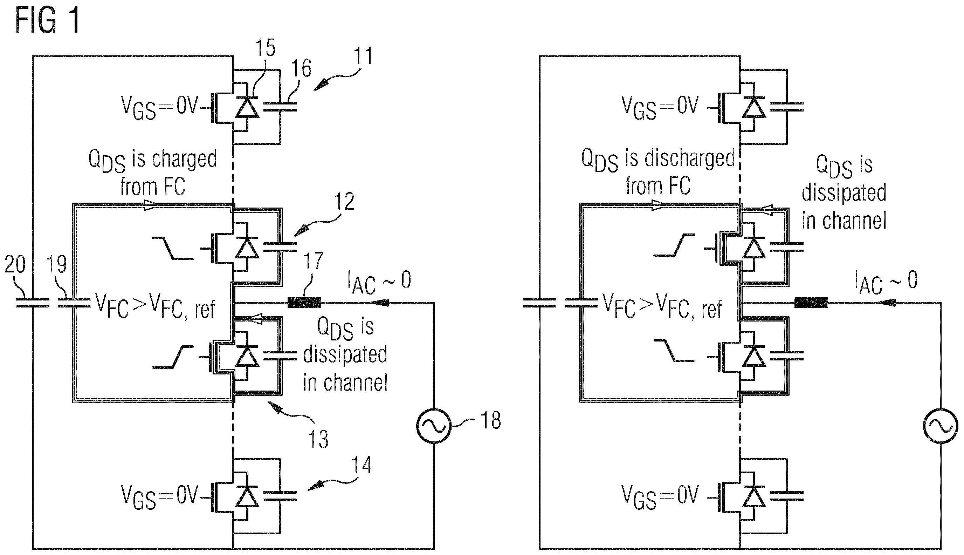

Fig. 1 shows an exemplary switching pattern in the case of an over-charged flying capacitor 19. Fig. 1 shows an exemplary three-level boost type power converter with an additional bulk capacitor 20. When the switching pattern is applied e.g. to a four-level power converter with an additional high-side switching element and an additional low-side switching element, the bulk capacitor 20 may be also regarded as second flying capacitor. The power converter comprises a first switching element 11 coupled between a first terminal of the power converter and a first capacitor node, a second switching element 12 coupled between the first capacitor node and a switching node, a third switching element 13 coupled between the switching node and a second capacitor node, and a fourth switching element 14 coupled between the second capacitor node and a reference node. The flying capacitor 19 is coupled between the first capacitor node and the second capacitor node. In this example, the switching elements are implemented using field-effect transistors (FETs), and more specifically enhancement mode FETs. As illustrated in Fig. 1, each switching element may comprise a body diode 15 and an output capacitance 16. In Fig. 1, the dashed connections between switching elements 11 and 12 and between switching elements 13 and 14 indicate that the three-level boost type power converter could be extended to have more levels by inserting pairs of switching elements and corresponding flying capacitors between the outer and the inner switching elements. The power converter also comprises an inductor 17 and a (AC) power source 18.

In the situation where the flying capacitor voltage V_{FC} is larger than the reference V_{FC,ref} (setpoint voltage), the inner switches connected to this flying capacitor are triggered to switch alternatingly (i.e. with a proper dead-time). Every time when one of the switches turns on, the charge Q_{DS} is flowing out of the flying capacitor, which reduces its voltage, as shown in Fig. 1. The remaining switches are turned off.

In Fig. 1, the circuit on the left illustrates a first phase of a (discharging) switching cycle during which the inner low side switching element 13 is turned on and all other switches are turned off. Therefore, the charge Q_{DS} of the output capacitance of the inner low side switching element 13 is dissipated in its channel. The flying capacitor is discharged accordingly via a current path through the output capacitance of the inner high-side switching element 12 and through the drain-source channel of the inner low-side switching element 13. In Fig. 1, current paths are displayed using arrows.

The circuit on the right illustrates a second phase of the exemplary switching cycle during which the inner high side switching element 12 is turned on and all other switches are turned off. Consequently, the charge Q_{DS} of the output capacitance of the inner high side switching element 12 is dissipated in its channel. The flying capacitor is discharged accordingly via a current path through the output capacitance of the inner low side switching element 13 and through the drain-source channel of the inner high side switching element 12. The first phase and the second phase of the switching cycle may be separated by a dead time during which all switches are turned off.

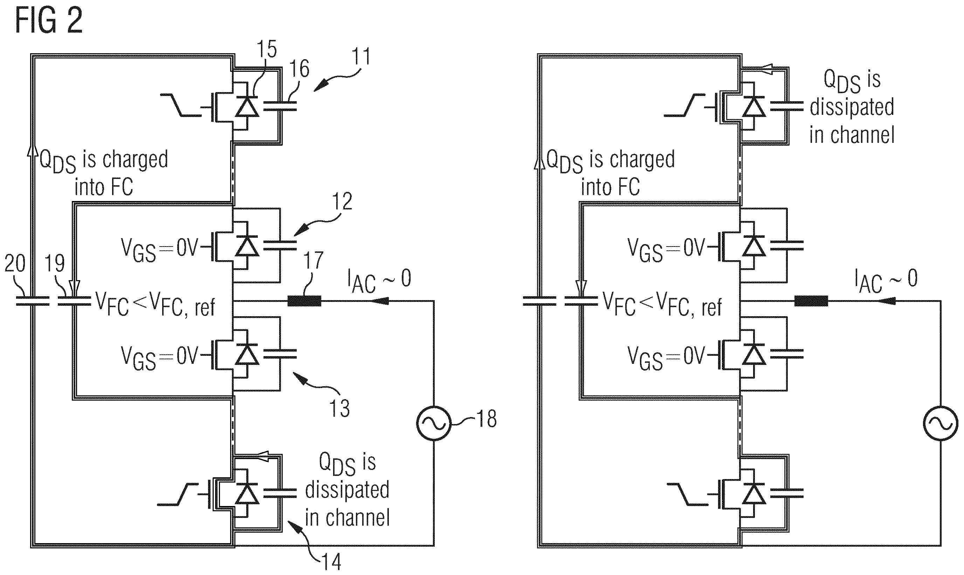

Fig. 2 shows exemplary switching pattern in the case of an under-charged flying capacitor. When the flying capacitor voltage is below the setpoint voltage, the outer switches connected to this flying capacitor are triggered, which leads to the charge Q_{DS} flowing into the flying capacitor, thus charging the capacitor, as shown in Fig. 2.

In Fig. 2, the circuit on the left illustrates a first phase of a (charging) switching cycle during which the outer low side switching element 14 is turned on and all other switches are turned off. Therefore, the charge Q_{DS} of the output capacitance of the outer low side switching element 14 is dissipated in its channel. The flying capacitor 19 is charged accordingly via a current path through the output capacitance of the outer high-side switching element 11 and through the drain-source channel of the outer low-side switching element 14. At the same time, the bulk capacitor 20 (which may be another flying capacitor of a four-or-more-level power converter) is discharged by the charge Q_{DS}.

The circuit on the right illustrates a second phase of the switching cycle during which the outer high side switching element 11 is turned on and all other switches are turned off. Consequently, the charge Q_{DS} of the output capacitance of the outer high side switching element 11 is dissipated in its channel. The flying capacitor 19 is charged accordingly via a current path through the output capacitance of the outer low side switching element 14 and through the drain-source channel of the outer high side switching element 11. The bulk capacitor 20 is discharged by the charge Q_{DS}. Again, the first phase and the second phase of the switching cycle may be separated by a dead time during which all switches are turned off.

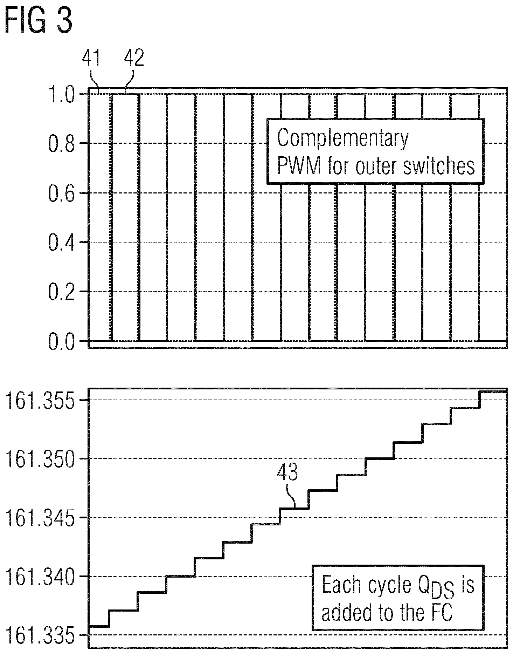

Fig. 3 shows exemplary signal waveforms for a switching pattern in the case of an under-charged flying capacitor. The top diagram shows the two complementary pulse width modulation (PWM) drive signals 41 and 42 for driving the gates of the outer switching elements (see Fig. 2). The bottom diagram shows the voltage 43 of the flying capacitor (FC) 19 which is stepwise increased by the charge Q_{DS}. Clearly visible is how the FC voltage is increasing when the outer devices are switching in regular complementary fashion. Therefore, balancing speed is switching frequency dependent. When the setpoint voltage is reached, the balancing stops (not shown).

The control loop for the proposed balancing method may be a very simple hysteretic control loop. Referring to Fig. 1, when the voltage of the flying capacitor *C*_{FC,i} is larger than a certain threshold above the setpoint, the switches *S*ᵢ and *S̅ᵢ̅* may be activated with a chosen switching frequency (e.g. the switching frequency used in normal/regular operation) and a chosen duty cycle (e.g. 50%), and operate until the flying capacitor voltage has dropped below another threshold. In the other case, when the flying capacitor voltage is below a certain threshold, the switches *S*ᵢ₊₁ and *̅S̅*̅_̅{̅*̅i̅*̅+̅1̅}̅ may be activated until the flying capacitor voltage exceeds another threshold. In addition, more elaborate regulation schemes with variable switching frequencies and/or variable duty cycles are possible with no loss of generality to achieve desired control dynamics, e.g. switching frequency increase with difference to setpoint.

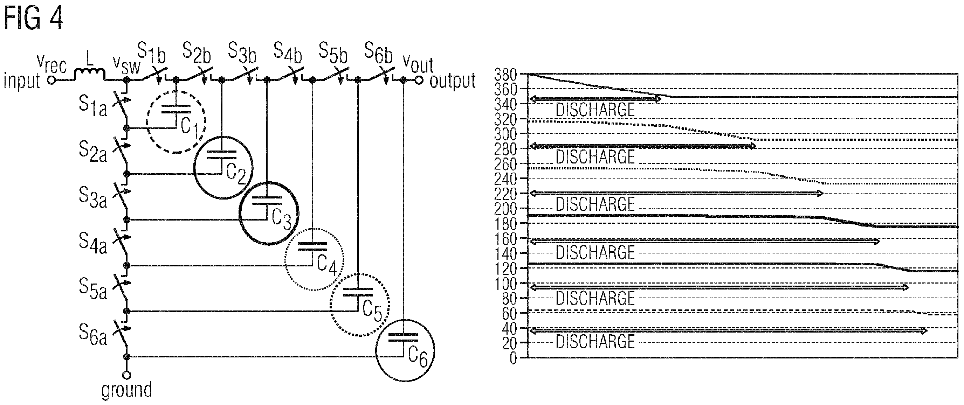

In Fig. 4, a generalization to higher number of levels is shown. A step from 380V to 350V output voltage is simulated. To keep the multi-level leg under balance without current in the inductor, the following aforementioned scheme is applied: each capacitor may be discharged until their respective references are achieved. In this case, while capacitor *Cᵢ* needs to be discharged to meet its reference value switches *Sᵢₐ* and *S_{ib}* = *S̅ₗ̅ₐ̅* may be switched alternatingly. If it would need to be charged *S*_{*i*+1*a*} and *S*_{*i*+1*b*} would be used instead. Note that the outermost capacitor may only be discharged through the proposed scheme.

In conclusion, the presented control method may achieve the balancing in standby through the dissipation of the charge Q_{DS} stored in the output capacitance of the power devices. This may lead to charges flowing either into or out of the flying capacitors and thus may allow to balance the flying capacitor voltage. Possible advantages are: Firstly, the method may be fully controlled by firmware, at most, changes to the modulator unit are to be applied, such as different frequency or duty cycles, instead of the ones used during normal operation. Secondly, no additional components needed for lowest cost and smallest footprint by re-using the already existing hardware. And thirdly, the proposed scheme exhibits very low losses since the method is only activated when needed.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A power converter module, comprising
- a first switching element coupled between a first terminal of the power converter module and a first capacitor node,
- a second switching element coupled between the first capacitor node and a switching node,
- a third switching element coupled between the switching node and a second capacitor node,
- a fourth switching element coupled between the second capacitor node and a reference node, and
- a flying capacitor coupled between the first capacitor node and the second capacitor node,
wherein the power converter module is configured to, in standby operation, alter a flying capacitor voltage across the flying capacitor by switching at least two of the four switching elements.

2. The power converter module according to claim 2, wherein
- essentially no current is flowing between the first terminal of the power converter and the switching node during standby operation, or
- essentially no current is flowing between the switching node and the reference node during standby operation.

3. The power converter module according to any one of the preceding claims, comprising an inductor coupled between the switching node and a second terminal of the power converter module, wherein essentially no current is flowing through the inductor during standby operation.

4. The power converter module according to any one of the preceding claims, wherein the power converter module is configured to alter the flying capacitor voltage by dissipating charges which are stored at the output capacitances of the at least two switching elements.

5. The power converter module according to any one of the preceding claims, wherein the power converter module is configured to control the switching of the at least two switching elements based on a difference between the flying capacitor voltage and a setpoint voltage.

6. The power converter module according to any one of the preceding claims, wherein the power converter module is configured to alter the flying capacitor voltage by alternatingly turning on one of the at least two switching elements.

7. The power converter module according to any one of the preceding claims, wherein the power converter module is configured to alternatingly turn on the second and the third switching element for decreasing the flying capacitor voltage.

8. The power converter module according to any one of the preceding claims, wherein the power converter module is configured to alternatingly turn on the first and the fourth switching element for increasing the flying capacitor voltage.

9. The power converter module according to any one of the preceding claims, wherein the power converter module is configured to determine a switching frequency based on a difference between the flying capacitor voltage and a setpoint voltage, and wherein the power converter module is configured to alternatingly turn on one of the at least two switching elements using said switching frequency.

10. The power converter module according to any one of the preceding claims, wherein the power converter module is configured to alternatingly turn on one of the at least two switching elements using a first switching frequency when a difference between the flying capacitor voltage and a setpoint voltage has a first value, wherein the power converter module is configured to alternatingly turn on one of the at least two switching elements using a second, higher switching frequency when a difference between the flying capacitor voltage and the setpoint voltage has second value, and wherein the second value is larger than the first value.

11. The power converter module according to any one of the preceding claims, wherein the power converter module further comprises another capacitor coupled between the first terminal of the power converter module and the reference node.

12. A method of controlling a power converter module in standby operation, wherein the power converter module comprises four switching elements and a flying capacitor, the method comprising
- altering a flying capacitor voltage across the flying capacitor by switching at least two of the four switching elements.

13. The method according to claim 12, comprising
- altering the flying capacitor voltage by alternatingly turning on one of the at least two switching elements.

14. A control circuit configured to control switching of switching elements of a power converter module in standby operation, wherein the power converter module comprises four switching elements and a flying capacitor, and wherein the control circuit is configured to generate control signals for switching at least two of the four switching elements such that a flying capacitor voltage across the flying capacitor is altered.

15. A computer program comprising instructions which, when executed by one or more processors of a control circuit, cause the control circuit to control a power converter module according to the method of claim 12.
